(19) Europäisches Patentamt / European Patent Office / Office européen des brevets

(11) **EP 3 069 843 B1**

(12) **EUROPEAN PATENT SPECIFICATION**

(45) Date of publication and mention
of the grant of the patent:
**02.01.2019 Bulletin 2019/01**

(51) Int Cl.:
*B29C 43/46* (2006.01)   *B29C 70/50* (2006.01)
*B29C 43/22* (2006.01)   *B29C 43/30* (2006.01)
*B29L 31/00* (2006.01)

(21) Application number: **16152872.4**

(22) Date of filing: **27.01.2016**

(54) **COMPOSITE MATERIAL SHAPING DEVICE AND COMPOSITE MATERIAL SHAPING METHOD**

VERBUNDMATERIALFORMUNGSVORRICHTUNG UND
VERBUNDMATERIALFORMUNGSVERFAHREN

DISPOSITIF DE FAÇONNAGE DE MATÉRIAU COMPOSITE, MATÉRIAU COMPOSITE ET
PROCÉDÉ DE MISE EN FORME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2015 JP 2015056273**

(43) Date of publication of application:
**21.09.2016 Bulletin 2016/38**

(73) Proprietor: **Subaru Corporation
Tokyo 150-8554 (JP)**

(72) Inventor: **RIHEI, Atsushi
Tokyo, 150-8554 (JP)**

(74) Representative: **Vossius & Partner
Patentanwälte Rechtsanwälte mbB
Siebertstrasse 3
81675 München (DE)**

(56) References cited:
**EP-A1- 2 018 950        WO-A1-2006/060895
DE-A1-102007 048 792     FR-A- 1 213 749
GB-A- 650 067            JP-A- H04 299 110
US-A- 3 518 157**

• **Anonymous: "Inclined | Definition of Inclined by
Merriam-Webster", , 14 August 2017
(2017-08-14), XP055398501, Retrieved from the
Internet:
URL:https://www.merriam-webster.com/dictio
nary/inclined [retrieved on 2017-08-14]**

**Description**

FIELD

Embodiments described herein relate generally to a composite material shaping device and a composite material shaping method.

BACKGROUND

A composite material, such as glass fiber reinforced plastics (GFRP) or carbon fiber reinforced plastics (CFRP), is formed by laminating and thermal curing of sheet-like prepregs. An airplane part, such as a stringer, a spar, and a rib, sometimes has a T-shaped or I-shaped cross section. In this case, a flatly laminated body of prepregs, a laminated body of prepregs whose cross section is L-shaped or C-shaped, and a laminate body of prepregs whose cross section has a shape line-symmetric to L-shape or C-shape are composed before curing them.

The corner of a laminated body of prepregs bent at a right angle has an R (round) chamfered shape. Thus, when laminated bodies of prepregs each bent at a right angle are disposed and butted symmetrically on a planate laminated body of prepregs, a gap having generally triangular cross section is generated between the laminated bodies of prepregs. More specifically, a gap whose cross section has a shape surrounded by two symmetrical circular arcs corresponding to the symmetrical R chamfers and the straight line appears among the three laminated bodies of prepregs.

Accordingly, the gap formed among the three laminated bodies of prepregs is filled up with a filler. A filler is also generally prepared as a laminated body of prepregs and is thermally cured together with other laminated bodies of prepregs. A rod-shaped filler whose cross section has a shape surrounded by two symmetrical circular arcs and a straight line is called a noodle filler. A noodle filler is made by shaping a round bar-like material consisting of spirally-laminated prpregs.

Generally, the forming of a laminated body of prepregs before thermal curing is called "shaping" in order to distinguish from the forming of a composite material by thermal curing. Then, the forming of a laminated body of prepregs is referred to as "shaping" hereafter.

Conventionally, a mold for shaping is generally used for shaping a laminated body of prepregs. For example, a method of shaping a laminated body of prepregs, placed on a mold, by a vacuum pressure, a method of shaping a laminated body of prepregs by extrusion molding with an extrusion molding device whose die is used as a mold fitted to a shape after the molding and a method of shaping a laminated body of prepregs by pressing a roller to the laminated body of prepregs are known.

However, the shaping method by a vacuum pressure has a problem that the shaping period is long. Specifically, the shaping method by a vacuum pressure requires about several hours to one day of the shaping period. In addition, shaping a bar-shaped filler such as a noodle filler requires the preparation of a mold which can shape the whole filler. Further, shaping with an extrusion molding device requires a large scale device to pull out a laminated body of prepregs because of the great shaping resistance.

On the other hand, a device for pressing a bar-like material with two rollers disposed in parallel is suggested as a device for shaping a noodle filler (for example, refer to Japanese Patent Application JP H04-299110). This device allows shaping a noodle filler by interleaving a bar-like material between a columnar roller and a roller having a dent fitted to a shape of the noodle filler, and then feeding the material out.

However, shaping a noodle filler using rollers has a problem that it is difficult to shape the noodle filler with satisfactory quality although the shaping resistance is smaller as compared to that in a case of shaping the noodle filler using an extrusion molding device. As a result, improvement in shaping quality by vacuum shaping of the material disposed in a mold may be required after the noodle filler shaping using the rollers.

Accordingly, an object of the present invention is to easily perform shaping bar-like prepregs such as shaping a noodle filler for filling a gap formed in laminated bodies of prepregs whose cross section has T-shape, I-shape or the like.

EP 2 018 950 A1 discloses a method and apparatus for producing solid profiles from a strip of resin-preimpregnated fibre. The method comprises the steps of: providing a planar strip of fiber preimpregnated with resin which has a longitudinal direction and a transverse direction; corrugating the planar strip to form a corrugated strip with a plurality of zigzag folds parallel to said longitudinal direction; and compacting said corrugated strip in said transverse direction in order to place in contact and to join, one to the other, surfaces of said plurality of folds in order to form a solid profile. The apparatus includes: a corrugating unit with a pair of corrugating rollers provided with matching circular striations suitable for corrugating said planar strip; and a compacting unit that comprises at least one pair of facing, lateral rollers with parallel axes suitable for compacting said corrugated strip laterally until said solid profile is obtained.

SUMMARY OF THE INVENTION

In general, according to one embodiment, a composite material shaping device includes three rollers that apply pressures on a laminated body of prepregs, from different angles. The prepregs are laminated in a bar shape.

Further, according to one embodiment, a composite material shaping method includes applying pressures on a laminated body of prepregs, from different angles, using three rollers. The prepregs are laminated in a bar shape.

BRIEF DESCRIPTION OF THE DRAWINGS

In the accompanying drawings:

Fig. 1 is a front view of a composite material shaping device according to an embodiment of the present invention;
Fig. 2 is a perspective view of the composite material shaping device shown in FIG. 1;
Fig. 3 is a perspective view showing a shape of a noodle filler which is a target of shaping by the composite material shaping device shown in FIG. 1;
Fig. 4 explains a method of determining the inclined angles of the second axis and the third axis from the first axis shown in FIG. 1;
Fig. 5 is a cross-sectional view of a noodle filler which is shaped by pressing the first, second, and third rollers at the angles shown in FIG. 4;
Fig. 6 shows the first example of changing the inclined angles of the second roller and the third roller; and
Fig. 7 shows the second example of changing the inclined angles of the second roller and the third roller.

DETAILED DESCRIPTION

A composite material shaping device and a composite material shaping method according to embodiments of the present invention will be described with reference to the accompanying drawings.

(Structure and Function)

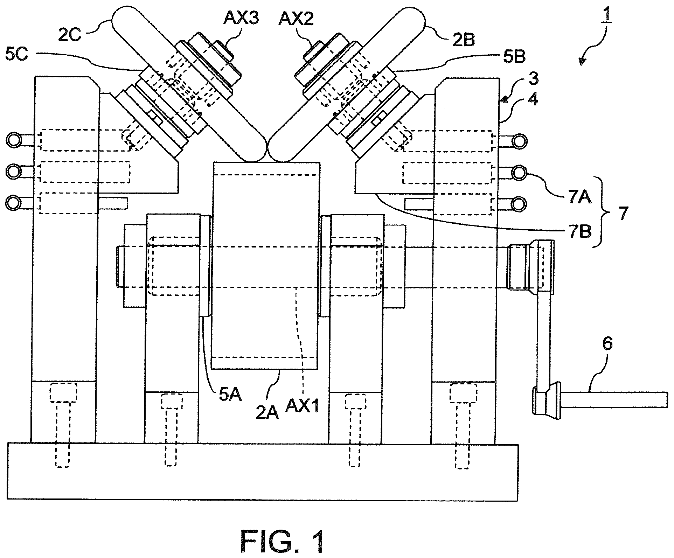

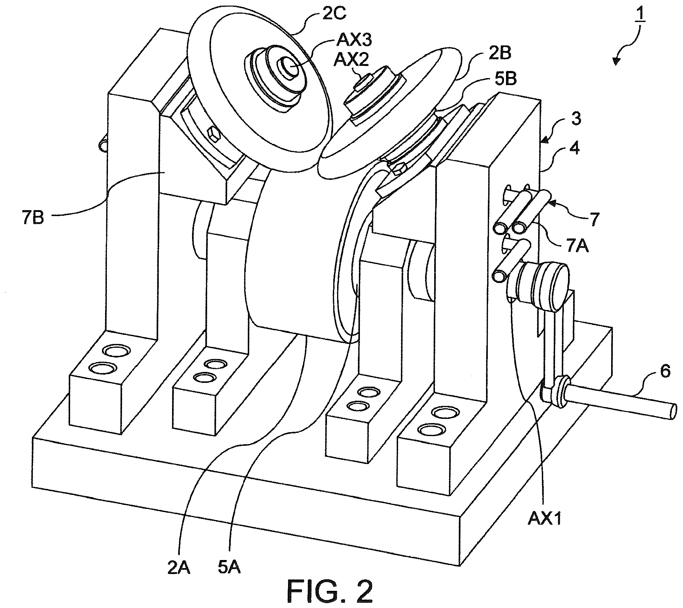

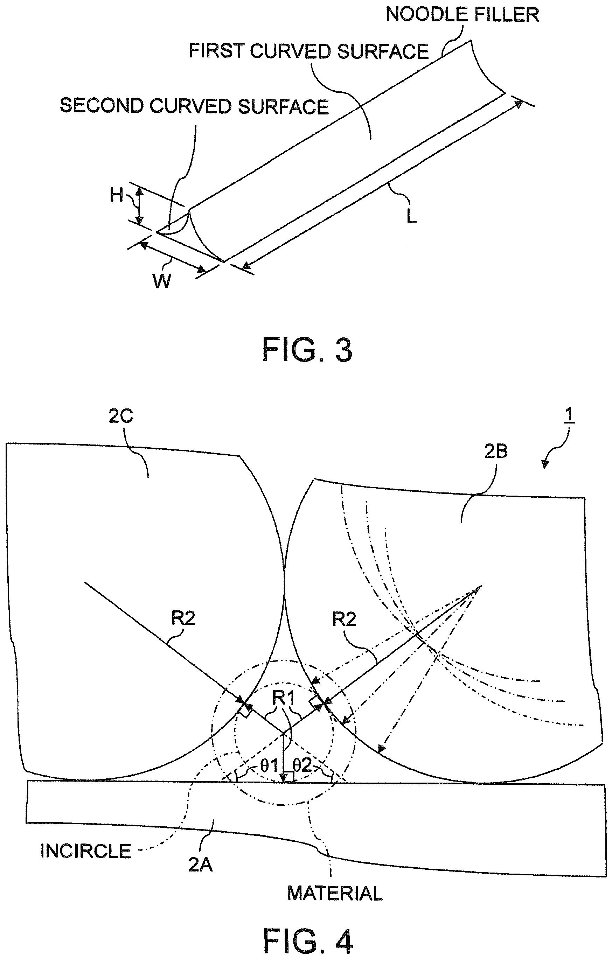

FIG. 1 is a front view of a composite material shaping device according to an embodiment of the present invention, FIG. 2 is a perspective view of the composite material shaping device shown in FIG. 1, and FIG. 3 is a perspective view showing a shape of a noodle filler which is a target of shaping by the composite material shaping device shown in FIG. 1.

A composite material shaping device 1 performs shaping of a noodle filler using a laminated body of prepregs laminated in a bar shape as a material. A noodle filler fills a gap caused by placing two symmetrically butted laminated bodies of prepregs, which have been bent at right angles respectively, on a laminated body of prepregs which has been laminated in a flat plate or in a slightly curved plate.

Therefore, a noodle filler is a bar-shaped filler whose cross-sectional shape is a shape surrounded by two symmetrical arcs and a straight line as shown in FIG. 3. Specifically, the noodle filler has a shape surrounded by a rectangular plane having a width of W and a length of L, the first curved surface whose cross-section is an arc, and the second curved surface which is symmetrical to the first curved surface. Therefore, the height H of the noodle filler becomes a distance between the line of intersection of the first curved surface and the second curved surface, and the rectangular plane.

Typically, an approximately round rod-shaped laminated body of prepregs, manufactured by spirally rolling a prepreg, is used as a material of the noodle filler. Shaping of the noodle filler is forming processing that forms a plane having a width of W and a length of L, the first curved surface whose cross-section is an arc, and the second curved surface which is symmetrical to the first curved surface, on an approximately round rod-shaped material.

The composite material shaping device 1 has three rollers 2A, 2B, and 2C, and a rotating structure 3. The three rollers 2A, 2B, and 2C apply pressures on a laminated body of prepregs, laminated in a bar shape, from different angles. Meanwhile, the rotating structure 3 rotates the three rollers 2A, 2B, and 2C. The three rollers 2A, 2B, and 2C shape one plane and two curved surfaces of a noodle filler, respectively. Therefore, the three rollers 2A, 2B, and 2C rotate around the three axes AX1, AX2, and AX3 by three shafts, which are not parallel to each other, respectively. Specifically, the first, second, and third rollers 2A, 2B, and 2C are disposed so as to form a space, corresponding to a cross-sectional shape of a noodle filler surrounded by two line-symmetric arcs and one straight line, among the first, second, and third rollers 2A, 2B, and 2C.

More specifically, the first roller 2A rotates around the first axis AX1 by the first shaft. The second roller 2B rotates around the second axis AX2, which inclines relative to the first axis AX1, by the second shaft. The third roller 2C rotates around the third axis AX3 by the third shaft of which the third axis AX3 inclines relative to the first shaft AX1 and is symmetrical to the second axis AX2 with respect to a plane perpendicular to the first axis AX1.

The first roller 2A shapes a plane having a width of W and a length of L. Therefore, the first roller 2A can be a cylindrical roller which rotates around the horizontal first axis AX1. The second roller 2B shapes a curved surface corresponding to one R chamfer of a noodle filler. Therefore, the second roller 2B can be a disk-shaped roller whose radius of the circumference portion is a radius of the R chamfer of the noodle filler. The third roller 2C shapes a curved surface corresponding to the other R chamfer of the noodle filler. Therefore, the third roller 2C can be also a disk-shaped roller whose radius of the circumference portion is the radius of the R chamfer of the noodle filler, similar to the second roller 2B.

Since R chamfers of a noodle filler become plane symmetry, the second axis AX2 of the second roller 2B and the third axis AX3 of the third roller 2C become symmetrical to each other with respect to the plane perpendicular to the first axis AX1, as described above. It is important to determine inclined angles of the second axis AX2 and the third axis AX3 to the first axis AX1 to be angles appropriate for shaping of a noodle filler. The angles of the second axis AX2 and the third axis AX3 appropriate for shaping of a noodle filler can be determined from various viewpoints.

As the first method of determining each inclined angle of the second axis AX2 and the third axis AX3, a method of determining each angle so that pressures are applied on three sides of a round rod-shaped material as uniformly as possible can be adopted. In this case, when the cross-sectional shape of a noodle filler is approximated to an isosceles right triangle, a method of determining angles so that the second axis AX2 and the third axis AX3 are inclined at $\pm 45$ degrees relative to the first axis AX1 respectively can be considered since the inclined angles of two sides with a right angle therebetween of the isosceles right triangle become $\pm 45$ degrees relative to the base.

Alternatively, a method of determining the inclined angles of the second axis AX2 and the third axis AX3 from the first axis AX so that compressed distances of a material by the first, second, and third rollers 2A, 2B, and 2C, respectively, become as equal as possible can also be considered.

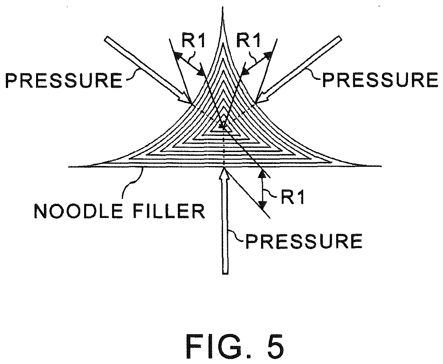

FIG. 4 explains a method of determining the inclined angles of the second axis AX2 and the third axis AX3 from the first axis AX1 shown in FIG. 1. FIG. 5 is a cross-sectional view of a noodle filler which is shaped by pressing the first, second, and third rollers 2A, 2B, and 2C at the angles shown in FIG. 4.

As shown in FIG. 4, when the incircle which is tangent to the first, second, and third rollers 2A, 2B, and 2C is considered, the distances from the center of the incircle to the respective tangent points between the rollers 2A, 2B, and 2C and the incircle become equal to each other. Therefore, when the rollers 2A, 2B, and 2C are pressed against the material at angles of line segments connecting the center of the incircle with the tangent points to the rollers 2A, 2B, and 2C, respectively, each of the maximum distances by which three sides of the material are compressed becomes a difference between a radius of the material before compression and a radius of the material after the compression. Thus, compressive forces are considered to be able to be applied uniformly on the three sides of the material as shown in FIG. 5.

In this case, when the radius of the incircle is expressed by R1 and the radius of tips of the first and second rollers 2A, 2B and a radius of R chamfer of a noodle filler are expressed by R2, $(R1+R2)^2 = R2^2+(R2-R1)^2$ is satisfied based on the Pythagorean theorem, thereby a relation of 4R1 = R2 is satisfied. Therefore, the angle $\theta1$ formed between the surface of the first roller 2A and the direction in which the second roller 2B is pressed becomes $\theta1 = 36.87$ degrees based on expression (1).

$$\cos\theta1 = R2/(R1+R2) = 4R1/(R1+4R1) = 4/5 \qquad (1)$$

When a direction of measuring the angle $\theta1$ at which the second roller 2B is pressed against the first roller 2A is the positive direction, the angle $\theta2$ formed between the surface of the first roller 2A and the direction in which the third roller 2C is pressed becomes $\theta2 = -36.87$ degrees, similarly. That is, when an inclined angle of the second axis AX2 of the second roller 2B to the first axis AX1 of the first roller 2A is set to - 90+36.87 = -53.13 degrees while an inclined angle of the third axis AX3 of the third roller 2C to the first axis AX1 of the first roller 2A is set to +53.13 degrees, the maximum compressed distances of a material by the first, second, and third rollers 2A, 2B, and 2C, respectively, can be equalized.

Since manufacturing errors actually arise, the inclined angles of the second axis AX2 and the third axis AX3 to the first axis AX1 should be designed as angles within a predetermined tolerance from $\pm 53.13$ degrees respectively.

Note that, even when a filler has a shape whose cross-section is not line-symmetric, the respective inclined angles of the second axis AX2 and the third axis AX3 to the first axis AX1 can be determined similarly so that a difference between a radius of an incircle which is tangent to the first, second, and third rollers 2A, 2B, and 2C, and a radius of a material before compression becomes the maximum compression distances by the first, second, and third rollers 2A, 2B, and 2C.

Shaping of noodle fillers was actually tested by setting the inclined angles of the second axis AX2 and the third axis AX3 to the first axis AX1 to $\pm 30$ degrees, $\pm 45$ degrees, and $\pm 60$ degrees in order to examine which of a method to set the inclined angles of the second axis AX2 and the third axis AX3 to the first axis AX1 to $\pm 45$ degrees by approximating a cross-sectional shape of a noodle filler to an isosceles right triangle, and a method to set the inclined angles of the second axis AX2 and the third axis AX3 to the first axis AX1 to $\pm 53.13$ degrees so that the maximum compression distances of a material by the first, second, and third rollers 2A, 2B, and 2C become equivalent to each other is appropriate.

As a result, it was confirmed that a noodle filler could be shaped most uniformly by the smallest power when the inclined angles of the second axis AX2 and the third axis AX3 to the first axis AX1 had been set to $\pm 60$ degrees. Furthermore, it was confirmed that a noodle filler could also be shaped in quality equivalent to that by the conventional method of shaping a noodle filler by a vacuum pressure when the inclined angles of the second axis AX2 and the third axis AX3 to the first axis AX1 had been set to $\pm 45$ degrees.

According to the result of the shaping tests as described above, it is preferable to dispose the first, second, and third rollers 2A, 2B, and 2C so that each inclined angle of the second axis AX2 and the third axis AX3 to the first axis AX1 is not less than 45 degrees and not more than 60 degrees, in other words, to set each absolute value of the angles $\theta 1$ and $\theta 2$, formed between the surface of the first roller 2A and the directions in which the second roller 2B and the third roller 2C are pressed, to not less than 30 degrees and not more than 45 degrees, from a viewpoint of applying compressive forces on three sides of a material uniformly. In particular, it can be considered that it is more preferable to set the inclined angles of the second axis AX2 and the third axis AX3 to the first axis AX1, to angles within a predetermined tolerance from $\pm 53.13$ degrees respectively, that is, to set the angles $\theta 1$ and $\theta 2$, formed between the surface of the first roller 2A and the directions in which the second roller 2B and third roller 2C are pressed, to $\pm 36.87$ degrees.

Meanwhile, according to the result of the shaping tests, it was confirmed that the smaller the inclined angles of the second axis AX2 and the third axis AX3 to the first axis AX1 are, the more flatness of the flat undersurface of a noodle filler shaped by the first roller 2A is improved. That is, the closer the angles $\theta 1$ and $\theta 2$, at which the second roller 2B and the third roller 2C are pressed, are to the vertical direction, the more flatness of the undersurface of a noodle filler can be improved. Nevertheless, when the angles $\theta 1$ and $\theta 2$, at which the second roller 2B and the third roller 2C are pressed, are brought extremely close to the vertical direction, uniformity of layers inside a noodle filler deteriorates.

Therefore, as the second method of determining the respective inclined angles of the second axis AX2 and the third axis AX3, a method of disposing the first, second, and third rollers 2A, 2B, and 2C so that each of the inclined angles of the second axis AX2 and the third axis AX3 to the first axis AX1 become not less than 10 degrees and not more than 40 degrees can be adopted from a viewpoint of improving flatness of the undersurface of a noodle filler. That is, it is preferable to set each absolute value of the angles $\theta 1$ and $\theta 2$, at which the second roller 2B and the third roller 2C are pressed, to not less than 50 degrees and not more than 90 degrees in order to improve flatness of the undersurface of a noodle filler.

As described above, a preferable range of the inclined angles of the second axis AX2 and the third axis AX3 to the first axis AX1 changes depending on which of the uniformity of layers inside a noodle filler and the flatness of the undersurface of the noodle filler is emphasized.

Specific shapes and sizes of the first, second, and third rollers 2A, 2B, and 2C can be determined depending on a size of a noodle filler. For example, radii at the end portions of the second roller 2B and the third roller 2C can be determined to radii at R chamfer portions of a noodle filler, respectively. Furthermore, the length of the first roller 2A should be determined to at least a length which can cover the undersurface of a noodle filler.

Diameters of the first, second, and third rollers 2A, 2B, and 2C can be determined to arbitrary lengths. Note that, the longer the diameters of the first, second, and third rollers 2A, 2B, and 2C are, the more a feed speed of a material can be increased since a feeding amount of the material per rotation of each of the rollers 2A, 2B, and 2C can be lengthened.

The first, second, and third rollers 2A, 2B, and 2C are desirable to have releasability from a laminated body of prepregs which is a material of a noodle filler. As a result of examination of the releasability, which was actually performed using polyurethane, polytetrafluoroethylene, and nylon 6,6 as a material, it was confirmed that polyurethane has a low releasability while polytetrafluoroethylene and nylon 6,6 have satisfactory releasability. In particular, it was confirmed that polytetrafluoroethylene has the most satisfactory releasability.

Therefore, nylon 6,6 or polytetrafluoroethylene is preferable as a material for the rollers 2A, 2B, and 2C, from a viewpoint of securing the releasability from prepregs. Hence, at least one surface layer of the three rollers 2A, 2B, and 2C is desirable to be made of nylon 6,6 or polytetrafluoroethylene as a material. Note that, each surface of the rollers 2A, 2B, and 2C may be covered with a film or a tape of nylon 6,6, polytetrafluoroethylene or the like, which has releasability, instead of making the whole rollers 2A, 2B, and 2C with a material having releasability. Nylon is a general term for polyamide involving an aliphatic skeleton. Nylon 6,6 is a nylon whose molecular structure is expressed by $\{CO\text{-}(CH_2)_4\text{-}CO\text{-}NH\text{-}(CH_2)_6\text{-}NH\}_n$.

The rotating structure 3 is a device for rotating the first, second, and third rollers 2A, 2B, and 2C. Therefore, the rotating structure 3 can be composed by disposing the first bearing 5A, the second bearing 5B and the third bearing 5C on the stand 4. The first bearing 5A bears the first shaft of the first roller 2A rotating around the first axis AX1. The second bearing 5B bears the second shaft of the second roller 2B rotating around the second axis AX2. The third bearing 5C bears the third shaft of the third roller 2C rotating around the third axis AX3.

The first bearing 5A has a structure that bears the first shaft, protruding from the cylindrical first roller 2A in the both sides, at two positions in the both sides of the first roller 2A. The second bearing 5B and the third bearing 5C have structures that bear the second shaft and third shaft of the disk-shaped second roller 2B and third roller 2C at predetermined inclined angles, respectively.

It is desirable to use an oilless bush, instead of a ball bearing, for each of the first bearing 5A, the second bearing 5B, and the third bearing 5C. That is, it is desirable to configure each of the three rollers 2A, 2B, and 2C to rotate with an oilless bush as a bearing. This is because use of oil which is not desirable for shaping of prepregs can be avoided when an oilless bush is used as a bearing. In addition, when an oilless bush is used, oiling work can also be unnecessary.

Furthermore, the rotating structure 3 has a handle 6 which gives rotative power to at least one of the first, second, and third rollers 2A, 2B, and 2C. In the example shown in the figures, the handle 6 is coupled to the first shaft, in the horizontal direction, which is a rotating shaft of the first roller 2A. Therefore, when the handle 6 is rotated, the first roller 2A rotates around the first axis AX1.

In a state where a material is inserted in a gap among the first, second, and third rollers 2A, 2B, and 2C, a rotation of the first roller 2A also causes rotations of the second and third rollers 2B and 2C due to friction force among the first, second, and third rollers 2A, 2B, and 2C, and the material. Therefore, when the handle 6 is rotated, the first, second, and third rollers 2A, 2B, and 2C can be rotated with extruding the material. Thereby, pressures can be applied on a laminated body of prepregs laminated in a bar shape, at angles different from each other, using the three rollers 2A, 2B, and 2C. As a result, the laminated body of prepregs laminated in a bar shape can be shaped as shown in FIG. 5. That is, a noodle filler can be shaped.

As described above, preferable inclined angles of the second roller 2B and the third roller 2C differ depending on which of the uniformity of a noodle filler or the flatness of the undersurface of the noodle filler is emphasized.

Thus, the composite material shaping device 1 can have inclination angle adjusting structures 7 for changing inclined angles of the second axis AX2 and the third axis AX3 to the first axis AX1. In the example shown in the figures, the second bearing 5B and the third bearing 5C have been attached to the replacement type inclination angle adjusting structures 7, respectively.

Each of the inclination angle adjusting structures 7 can be composed of bolts with levers 7A and a block 7B. The block 7B can be fixed to the stand 4 by the bolts with levers 7A. An inclined surface for setting the second bearing 5B or the third bearing 5C is formed on each block 7B. Inclined angles of the inclined surfaces formed on the blocks 7B are inclined angles of the second roller 2B and the third roller 2C, respectively. Thus, the inclined angles of the second roller 2B and the third roller 2C can be changed by preparing pairs of the blocks 7B on which the inclined surfaces different in the inclined angles have been formed.

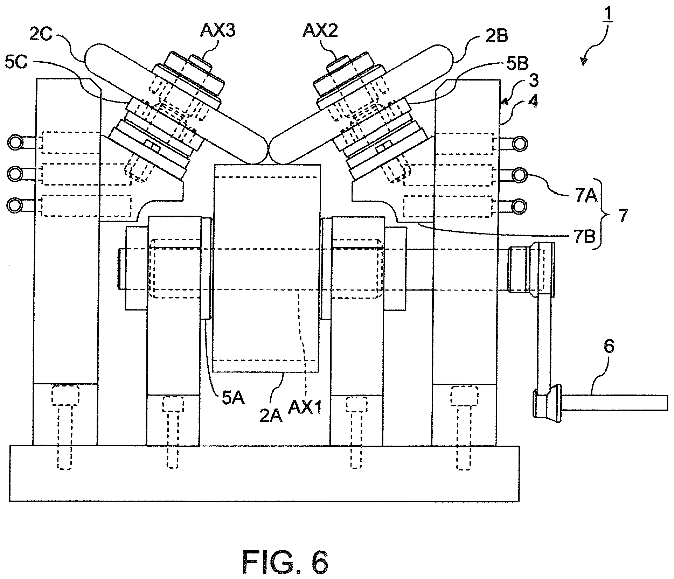

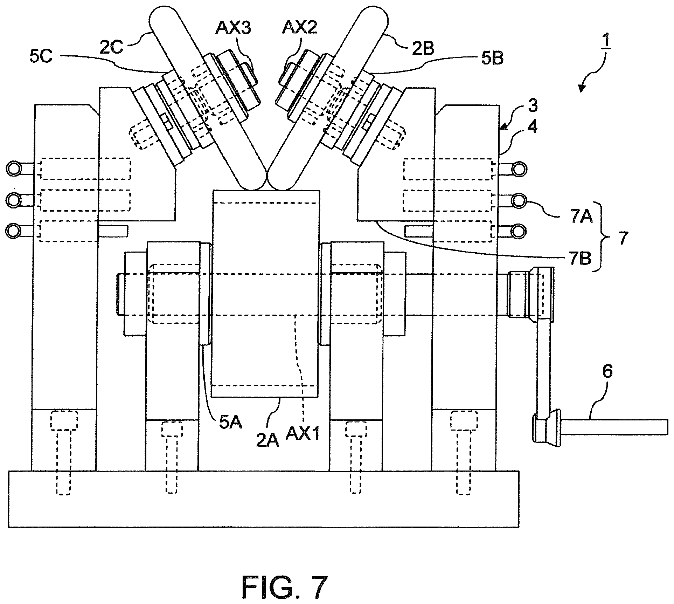

FIG. 6 shows the first example of changing the inclined angles of the second roller 2B and the third roller 2C. FIG. 7 shows the second example of changing the inclined angles of the second roller 2B and the third roller 2C.

As shown in FIG. 6 and FIG. 7, each of the blocks 7B, on which inclined surfaces different in inclined angles have been formed, can be fixed to the stand 4, and the second bearing 5B and the third bearing 5C can be installed on the blocks 7B, respectively. Thereby, the second axis AX2 and the third axis AX3 can be set in the perpendicular directions to the inclined surfaces of the blocks 7B, respectively. That is, the inclined angles of the second roller 2B and the third roller 2C can be set at predetermined angles.

Note that, not only limited to the examples shown in the figures, the composite material shaping device 1 may also have inclination angle adjusting structures which can continuously change inclined angles of the second roller 2B and the third roller 2C so that the inclined angles of the second roller 2B and the third roller 2C can be fine-adjusted. Alternatively, the composite material shaping device 1 may have inclination angle adjusting structures which can intermittently change the inclined angles of the second roller 2B and the third roller 2C so that the inclined angles of the second roller 2B and the third roller 2C become preferable inclined angles.

As described above, the composite material shaping device 1 and the composite material shaping method are to shape prepregs, such as a noodle filler, by disposing the three rollers 2A, 2B, and 2C at predetermined angles, and compressing a material from three different directions by the three rollers 2A, 2B, and 2C.

(Effects)

Thus, the composite material shaping device 1 and the composite material shaping method allow high-quality shaping of prepregs, with a simpler structure and in a shorter time than those in the conventional device and method. For example, in the conventional method of shaping a filler by giving displacement only in the vertical direction using two rollers having special shapes fitting a shape of the filler, sufficient quality could not be obtained and shaping by a vacuum pressure was occasionally necessary. By contrast, the composite material shaping device 1 and the composite material shaping method allow shaping a filler with sufficient quality since pressures can be given more uniformly from three directions using the three rollers 2A, 2B, and 2C. Hence, shaping by a vacuum pressure becomes unnecessary. Furthermore, a large scale device, such as an extrusion molding device, is also unnecessary.

Furthermore, a filler can be shaped with a smaller power by pressing the three rollers 2A, 2B, and 2C on a material at angles at which pressures become more uniform. This has also been confirmed by shaping tests with changing angles of the rollers 2B and 2C.

**Claims**

1. A composite material shaping device (1) comprising:

   three rollers that apply pressures on a laminated body of prepregs, from different angles, the prepregs being laminated in a bar shape,
   wherein the three rollers include:

   a first roller (2A) that rotates around a first axis (AX1);
   a second roller (2B) that rotates around a second axis (AX2); and
   a third roller (2C) that rotates around a third axis (AX3),

   wherein the second axis (A2) is inclined relative to the first axis (AX1) and the third axis (AX3) is symmetrical to the second axis (AX2) with respect to a plane perpendicular to the first axis (AX1), the second axis being not parallel to the third axis,
   wherein the first roller (2A), the second roller (2B) and the third roller (2C) are disposed so as to form a space among the first roller (2A), the second roller (2B) and the third roller (2C), the space corresponding to a cross-sectional shape of a filler.

2. The composite material shaping device (1) according to claim 1,
   wherein the first roller (2A), the second roller (2B) and the third roller (2C) are disposed so as to form a space among the first roller (2A), the second roller (2B) and the third roller (2C), the space corresponding to a cross-sectional shape of a noodle filler, the cross-sectional shape of the noodle filler being surrounded by two line-symmetric arcs and a straight line.

3. The composite material shaping device (1) according to claim 1 or 2,
   wherein the first roller (2A), the second roller (2B) and the third roller (2C) are disposed in a state where an inclined angle of the second axis (AX2) to the first axis (AX1) becomes not less than 45 degrees and not more than 60 degrees.

4. The composite material shaping device (1) according to claim 1 or 2,
   wherein the first roller (2A), the second roller (2B) and the third roller (2C) are disposed in a state where an inclined angle of the second axis (AX2) to the first axis (AX1) becomes not less than 10 degrees and not more than 40 degrees.

5. The composite material shaping device (1) according to any one of claims 1 to 4, further comprising:
   an inclination angle adjusting structure (7) that changes an inclined angle of the second axis (AX2) to the first axis (AX1).

6. The composite material shaping device (1) according to any one of claims 1 to 5,
   wherein each of the three rollers is configured to rotate using an oilless bush as a bearing (5A, 5B, 5C).

7. The composite material shaping device (1) according to any one of claims 1 to 6,
   wherein at least one surface layer of the three rollers is made of nylon 6,6 or polytetrafluoroethylene as a material.

8. A composite material shaping method for shaping the laminated body using the composite material shaping device (1) according to any one of claims 1 to 7.

9. A composite material shaping method for applying pressures on a laminated body of prepregs, from different angles, using three rollers, the prepregs being laminated in a bar shape,
   wherein the three rollers include:

   a first roller (2A) that rotates around a first axis (AX1);

a second roller (2B) that rotates around a second axis (AX2); and
a third roller (2C) that rotates around a third axis (AX3),

**characterized in that** the second axis (AX2) is inclined relative to the first axis (AX1) and the third axis (AX3) is symmetrical to the second axis (AX2) with respect to a plane perpendicular to the first axis (AX1), the second axis being not parallel to the third axis,
wherein the three rollers are disposed so as to form a space among the first roller (2A), the second roller (2B) and the third roller (2C), the space corresponding to a cross-sectional shape of a filler.

**Patentansprüche**

1. Verbundmaterialformungsvorrichtung (1) mit:

   drei Walzen, die unter verschiedenen Winkeln Drücke auf einen Schichtkörper von Prepregs ausüben, wobei die Prepregs in einer Stabform laminiert sind,
   wobei die drei Walzen aufweisen:

   eine erste Walze (2A), die sich um eine erste Achse (AX1) dreht;
   eine zweite Walze (2B), die sich um eine zweite Achse (AX2) dreht; und
   eine dritte Walze (2C), die sich um eine dritte Achse (AX3) dreht,

   wobei die zweite Achse (A2) bezüglich der ersten Achse (AX1) geneigt ist und die dritte Achse (AX3) bezüglich einer Ebene senkrecht zur ersten Achse (AX1) symmetrisch zur zweiten Achse (AX2) angeordnet ist, und wobei die zweite Achse sich nicht parallel zur dritten Achse erstreckt,
   wobei die erste Walze (2A), die zweite Walze (2B) und die dritte Walze (2C) derart angeordnet sind, dass zwischen der ersten Walze (2A), der zweiten Walze (2B) und der dritten Walze (2C) ein Raum gebildet wird, wobei der Raum einer Querschnittsform eines Füllstücks entspricht.

2. Vorrichtung (1) nach Anspruch 1,
   wobei die erste Walze (2A), die zweite Walze (2B) und die dritte Walze (2C) derart angeordnet sind, dass zwischen der ersten Walze (2A), der zweiten Walze (2B) und der dritten Walze (2C) ein Raum gebildet wird, wobei der Raum einer Querschnittsform eines nudelartigen Füllstücks entspricht, wobei die Querschnittsform des nudelartigen Füllstücks von zwei liniensymmetrischen Bögen und einer geraden Linie umschlossen ist.

3. Vorrichtung (1) nach Anspruch 1 oder 2, wobei die erste Walze (2A), die zweite Walze (2B) und die dritte Walze (2C) in einem Zustand angeordnet sind, in dem ein Neigungswinkel der zweiten Achse (AX2) zur ersten Achse (AX1) nicht kleiner wird als 45 Grad und nicht größer als 60 Grad.

4. Vorrichtung (1) nach Anspruch 1 oder 2, wobei die erste Walze (2A), die zweite Walze (2B) und die dritte Walze (2C) in einem Zustand angeordnet sind, in dem ein Neigungswinkel der zweiten Achse (AX2) zur ersten Achse (AX1) nicht kleiner wird als 10 Grad und nicht größer als 40 Grad.

5. Vorrichtung (1) nach einem der Ansprüche 1 bis 4, ferner mit:
   einer Neigungswinkeleinstellstruktur (7), die einen Neigungswinkel der zweiten Achse (AX2) zur ersten Achse (AX1) ändert.

6. Vorrichtung (1) nach einem der Ansprüche 1 bis 5,
   wobei jede der drei Walzen dafür konfiguriert ist, sich unter Verwendung einer ölfreien Buchse als ein Lager (5A, 5B, 5C) zu drehen.

7. Vorrichtung (1) nach einem der Ansprüche 1 bis 6,
   wobei mindestens eine Oberflächenschicht der drei Walzen aus Nylon 6,6 oder Polytetrafluorethylen als ein Material hergestellt ist.

8. Verfahren zum Formen eines Verbundmaterials zum Formen des Schichtkörpers unter Verwendung der Verbundmaterialformungsvorrichtung (1) nach einem der Ansprüche 1 bis 7.

**9.** Verfahren zum Formen eines Verbundmaterials zum Ausüben von Drücken auf einen Schichtkörper aus Prepregs unter verschiedenen Winkeln unter Verwendung von drei Walzen, wobei die Prepregs in einer Stangenform laminiert werden,
wobei die drei Walzen aufweisen:

eine erste Walze (2A), die sich um eine erste Achse (AX1) dreht;
eine zweite Walze (2B), die sich um eine zweite Achse (AX2) dreht; und
eine dritte Walze (2C), die sich um eine dritte Achse (AX3) dreht;

**dadurch gekennzeichnet, dass**

die zweite Achse (AX2) bezüglich der ersten Achse (AX1) geneigt ist; und
die dritte Achse (AX3) bezüglich einer Ebene senkrecht zur ersten Achse (AX1) symmetrisch zur zweiten Achse (AX2) angeordnet ist, wobei die zweite Achse sich nicht parallel zur dritten Achse erstreckt,
wobei die drei Walzen derart angeordnet sind, dass zwischen der ersten Walze (2A), der zweiten Walze (2B) und der dritten Walze (2C) ein Raum gebildet wird, wobei der Raum einer Querschnittsform eines Füllstücks entspricht.


**Revendications**

**1.** Dispositif de mise en forme de matériau composite (1) comprenant :

trois galets qui appliquent des pressions sur un corps stratifié de préimprégnés, depuis des angles différents, les préimprégnés étant stratifiés en forme de barre,
où les trois galets incluent :

un premier galet (2A) qui tourne autour d'un premier axe (AX1) ;
un second galet (2B) qui tourne autour d'un second axe (AX2); et
un troisième galet (2C) qui tourne autour d'un troisième axe (AX3),

où le second axe (A2) est incliné par rapport au premier axe (AX1) et le troisième axe (AX3) est symétrique du second axe (AX2) par rapport à un plan perpendiculaire au premier axe (AX1), le second axe n'étant pas parallèle au troisième axe,
où le premier galet (2A), le second galet (2B) et le troisième galet (2C) sont disposés de manière à former un espace entre le premier galet (2A), le second galet (2B) et le troisième galet (2C), l'espace correspondant à une forme en coupe transversale d'une charge.

**2.** Dispositif de mise en forme de matériau composite (1) selon la revendication 1,
où le premier galet (2A), le second galet (2B) et le troisième galet (2C) sont disposés de manière à former un espace entre le premier galet (2A), le second galet (2B) et le troisième galet (2C), l'espace correspondant à une forme en coupe transversale d'une charge en nouille, la forme en coupe transversale de la charge en nouille étant entourée par deux arcs aux tracés symétriques et une droite.

**3.** Dispositif de mise en forme de matériau composite (1) selon la revendication 1 ou 2,
où le premier galet (2A), le second galet (2B) et le troisième galet (2C) sont disposés dans un état dans lequel un angle incliné du second axe (AX2) par rapport au premier axe (AX1) ne devient pas inférieur à 45 degrés et pas supérieur à 60 degrés.

**4.** Dispositif de mise en forme de matériau composite (1) selon la revendication 1 ou 2,
où le premier galet (2A), le second galet (2B) et le troisième galet (2C) sont disposés dans un état dans lequel un angle incliné du second axe (AX2) par rapport au premier axe (AX1) ne devient pas inférieur à 10 degrés et pas supérieur à 40 degrés.

**5.** Dispositif de mise en forme de matériau composite (1) selon l'une quelconque des revendications 1 à 4, comprenant en outre :
une structure d'ajustement d'angle d'inclinaison (7) qui change un angle incliné du second axe (AX2) par rapport au premier axe (AX1).

**6.** Dispositif de mise en forme de matériau composite (1) selon l'une quelconque des revendications 1 à 5, où chacun des trois galets est configuré pour tourner en utilisant un coussinet sans huile comme palier (5A, 5B, 5C).

**7.** Dispositif de mise en forme de matériau composite (1) selon l'une quelconque des revendications 1 à 6, où au moins une couche de surface des trois galets est faite de nylon 6,6 ou de polytétrafluoroéthylène comme matériau.

**8.** Procédé de mise en forme de matériau composite pour mettre en forme le corps stratifié utilisant le dispositif de mise en forme de matériau composite (1) selon l'une quelconque des revendications 1 à 7.

**9.** Procédé de mise en forme de matériau composite pour appliquer des pressions sur un corps stratifié de préimprégnés, depuis des angles différents, utilisant trois galets, les préimprégnés étant stratifiés en forme de barre, où les trois galets incluent :

un premier galet (2A) qui tourne autour d'un premier axe (AX1) ;
un second galet (2B) qui tourne autour d'un second axe (AX2) ; et
un troisième galet (2C) qui tourne autour d'un troisième axe (AX3),
**caractérisé en ce que** le second axe (AX2) est incliné par rapport au premier axe (AX1) et le troisième axe (AX3) est symétrique du second axe (AX2) par rapport à un plan perpendiculaire au premier axe (AX1), le second axe n'étant pas parallèle au troisième axe,
où les trois galets sont disposés de manière à former un espace entre le premier galet (2A), le second galet (2B) et le troisième galet (2C), l'espace correspondant à une forme en coupe transversale d'une charge.

FIG. 1

FIG. 2

EP 3 069 843 B1

NOODLE FILLER

FIRST CURVED SURFACE

SECOND CURVED SURFACE

H

W

L

# FIG. 3

2C

1

2B

R2

R2

R1

θ1 θ2

INCIRCLE

2A

MATERIAL

# FIG. 4

FIG. 5

FIG. 6

EP 3 069 843 B1

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04299110 B

- EP 2018950 A1